# EUROPEAN PATENT APPLICATION

(11) **EP 3 144 908 A2**
(43) Date of publication of application: **22.03.2017**
(21) Application number: 16178517.5
(22) Date of filing: 08.07.2016
(51) Int. Cl.: G08B 17/12, F24C 7/08, G01J 5/08

(54) **TEMPERATURE GUARD SENSOR UNIT**

(30) Priority: 21.09.2015 FI 20155673
(71) Applicant: Innohome Oy, 02600 Espoo (FI)
(72) Inventor: MYLLYMÄKI, Matti, 02600 Espoo (FI)
(74) Representative: LEITZINGER OY

(57) **Abstract**

The invention relates to a temperature guard sensor unit, which is to be connected as part of a temperature supervision system used to supervise the temperature of desired objects to prevent a fire and to issue an alarm of a dangerous situation. The sensor unit (1) includes one or more remote thermal sensors (2) and an optic module (3) defining an observation area, through which the remote thermal sensor monitors the temperature of the desired objects. The optic module (3) is interchangeably attached to the sensor unit (1), wherein optic modules provided with observation areas differing from one another are arranged to be optionally attached to the same sensor unit (1). In this case, the same sensor unit is suitable for different installation sites and different objects to be supervised, when the sensor unit is provided with an optic module (3) suitable for observing the object to be supervised from its installation site.

## Description

The invention relates to a temperature guard sensor unit, which is to be connected as part of a temperature supervision system used to supervise the temperature of desired objects to prevent a fire and to issue an alarm of a dangerous situation, the sensor unit including one or more remote thermal sensors and an optic module, which defines an observation area, through which the remote thermal sensor monitors the temperature of the desired object.

Known remote thermal guards are i.a. stove guard sensor solutions having fixed IR detectors and separate sensor units installed to the stove hood fan or to the ceiling. The disadvantage of current solutions is that several different types of sensor are needed and their functions differ from one another, wherein separate safety device entities are needed in the temperature guards to be installed to the stove hood fan and the ceiling. Known art represents also differential sensors to be installed to the ceiling, the alarm of which is based on the rate the temperature rises. Their disadvantage is that they monitor the heating of the air, wherein they issue an alarm too late.

The object of the invention is to provide a sensor unit, with which it is possible to implement several different installation sites using a single sensor and which sensor unit can, if desired, also be used to monitor a larger area, for example, in a kitchen, wherein dangerous home appliances can be supervised by a single sensor.

The object of the invention is achieved on the basis of the characterizing features presented in the accompanying claim 1. The dependent claims present preferred embodiments of the invention.

A solution according to the invention is thus based on an interchangeable optic module and on the fact that optic modules provided with observation areas differing from each other are arranged to be optionally attached to the same sensor unit. In this case, the same sensor unit along with its sensors is suitable for different installation sites and different objects to be supervised, when the sensor unit is provided with an optic module suitable for monitoring the object to be supervised from its installation site. It is possible to prefabricate an adequate amount of optic modules provided with different observation areas or lenses, from which can be selected for attaching to the sensor unit that module, which is most suitable for any given purpose.

When an IR remote thermal sensor is used, an alarm can be issued faster than with differential sensors and the area to be supervised can be selected due to a solution according to the invention from the different types of optic modules that are included in the package. The sensor unit of a remote thermal guard can also have several directable optic modules, wherein several objects can be supervised by the same sensor unit.

The structure of the sensor unit can be designed such that it is suitable to be installed optionally to a stove hood fan, on a wall or to the ceiling, wherein by interchanging the optic module of the remote thermal sensor of the sensor unit it can be installed in different sites and at different distances from an object to be supervised.

In the following, embodiment examples of the invention are illustrated by means of reference to the accompanying drawings, in which:
- Fig. 1: shows a perspective view of a sensor unit according to the invention;
- Fig. 2: shows how easily the optic module of the sensor unit can be inter-changed;
- Fig. 3: shows how the same sensor unit can optionally be installed at different distances from and at different angles in relation to the object to be supervised, such as a stove 10; and
- Fig. 4: shows a sectional view of one embodiment example of the optic module 3 as pivotally adapted into the interchangeable protective casing 3b of the sensor unit.

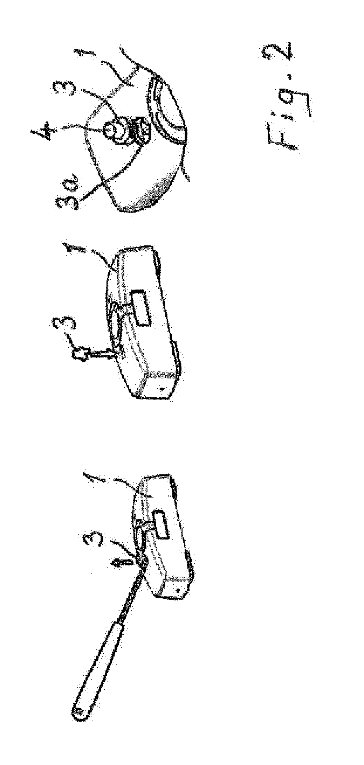

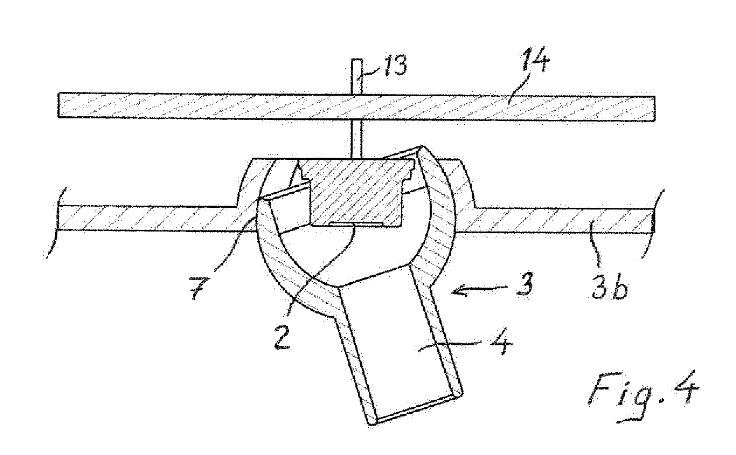

The sensor unit 1 is to be connected as part of a temperature supervision system used to supervise the temperature of desired objects to prevent a fire and to issue an alarm of a dangerous situation. The sensor unit 1 includes one or more remote thermal sensors 2 and an optic module 3, which has a tubular or cylindrical opening (Fig. 2 and 4) defining an optical observation area, through which the remote thermal sensor 2 monitors the temperature of the desired object. If a wider observation area is desired, as the sensor unit is installed in the vicinity of the object, a Fresnel lens can be used. A normal optic lens can also be used. An accurate defining of the object area is necessary in order to avoid false alarms while still achieving adequate observation sensitivity.

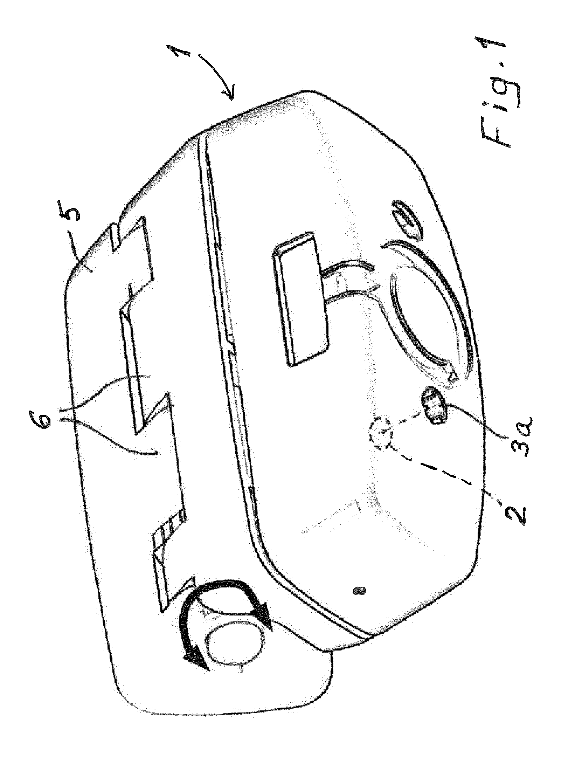

In the embodiment of Figs. 1 and 2, the detector unit 1 has a receptor space 3a of the optic module 3, to which the optic module 3 is interchangeably attached. Fig. 2 illustrates how the optic module can easily be interchanged by lifting it up from the receptor space 3a with the tip of a screwdriver. It can be replaced by pressing into the receptor space 3a another optic module 3, the observation area-defining opening 4 of which is suitable for the installation site and the object to be supervised. The opening 4 can be tubular or cylindrical or it can be based on a Fresnel lens. The shape of the lens or opening 4 and, respectively, the observation area can also be elliptical, wherein it can supervise a wider area from the ceiling.

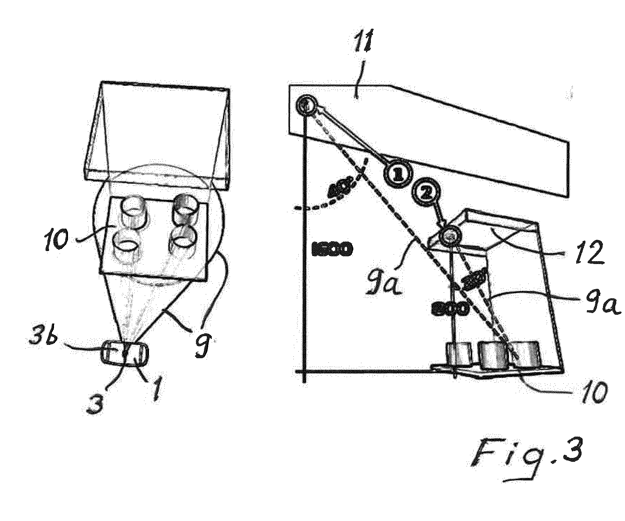

Fig. 3 shows how the sensor unit 1 of the thermal guard of the stove 10 can be installed at different distances from the stove and at different angles such that the central axis 9a of the observation area 9 defined by the opening 4 is at different angles in relation to the stove 10. When installing on a wall 11, the distance and angle are greater than when installing to a stove hood fan 12. The same sensor unit 1 can be used in both installation sites, when the optic module 3 is interchanged to suit the installation site such that the observation area 9 covers the area of the stove 10.

In the embodiment example of Fig. 1, the sensor unit 1 is provided with a fastener 5, which engages by a swivel joint 6 with the sensor unit 1 to achieve the desired angle of supervision. The fastener 5 can be optionally attached to a stove hood fan 12 or to the ceiling or on a wall 11.

As is shown in Fig. 4, the optic module 3 of the sensor unit can be a part of an interchangeable protective casing 3b. In this case, an articulated 7 fastener can be used for attaching the optic module 3 to achieve the desired angle of supervision. In the embodiment example shown, the joint 7 is a ball joint. The same sensor unit 1 may have one or more optic modules 3. The circuit board, to which the remote thermal sensor 2 is connected with a pin 13, is marked with reference numeral 14.

The same sensor unit can be optionally mounted to a stove hood fan 12 or to the ceiling or on a wall 11. By using the same sensor unit and interchangeable optic module, installation can easily be made at different distances and in different sites by just interchanging the optic module 3.

## Claims

1. A temperature guard sensor unit, which is to be connected as part of a temperature supervision system used to supervise the temperature of desired objects to prevent a fire and to issue an alarm of a dangerous situation, the sensor unit (1) including one or more remote thermal sensors (2) and an optic module (3) defining an observation area, through which the remote thermal sensor monitors the temperature of the desired object, **characterized in that** the optic module (3) is interchangeably attached to the sensor unit (1) and that optic modules provided with observation areas differing from one another are arranged to be optionally attached to the same sensor unit (1), wherein the same sensor unit is suitable for different installation sites and different objects to be supervised, when the sensor unit is provided with an optic module (3) suitable for monitoring the object to be supervised from its installation site.

2. A sensor unit according to claim 1, **characterized in that** to the same sensor unit are to be optionally attached optic modules, the observation area of which is one of the following: tubular, cylindrical or based on a Fresnel lens.

3. A sensor unit according to claim 1, **characterized in that** the observation area of the optic module is elliptical.

4. A sensor unit according to any one of claims 1-3, **characterized in that** the sensor unit (1) is to be optionally mounted to the ceiling, on a wall (11) or to a stove hood fan (12) using, in each location site, an optic module (3) suitable for its observation area (9).

5. A sensor unit according to any one of claims 1-4, **characterized in that** the sensor unit (1) optionally mounted to a stove hood fan (12) or to the ceiling or on a wall (11) is provided with an articulated (6) fastener (5) to achieve the desired angle of supervision.

6. A sensor unit according to any one of claims 1-5, **characterized in that** for attachment of the one or more optic modules (3) of the sensor unit optionally mounted to a stove hood fan (12) or to the ceiling or on a wall (11) is used a fastener provided with a joint (7) to achieve the desired angle of supervision.

7. A sensor unit according to any one of claims 1-6, **characterized in that** the optic module (3) of the sensor unit (1) is a part of an interchangeable protective casing (3b).

8. A sensor unit according to any one of claims 1-7, **characterized in that** as the remote thermal sensor (2) is used an IR remote thermal sensor.
